**Europäisches Patentamt**

**European Patent Office**

**Office européen des brevets**

(19)

(11) Veröffentlichungsnummer : **0 374 637 B1**

(12) # EUROPÄISCHE PATENTSCHRIFT

(45) Veröffentlichungstag der Patentschrift :
**17.06.92 Patentblatt 92/25**

(51) Int. Cl.$^5$ : **A47J 31/46, A47J 27/04**

(21) Anmeldenummer : **89122674.8**

(22) Anmeldetag : **08.12.89**

(54) **Vorrichtung zum Zubereiten von Cappuccino.**

(30) Priorität : **15.12.88 DE 3842206**

(43) Veröffentlichungstag der Anmeldung :
**27.06.90 Patentblatt 90/26**

(45) Bekanntmachung des Hinweises auf die
Patenterteilung :
**17.06.92 Patentblatt 92/25**

(84) Benannte Vertragsstaaten :
**AT BE CH DE FR IT LI NL**

(56) Entgegenhaltungen :
**DE-A- 3 538 041**
**DE-A- 3 644 519**
**DE-A- 3 742 203**

(73) Patentinhaber : **Robert Krups GmbH & Co. KG**
**Heresbachstrasse 29**
**W-5650 Solingen 19 (DE)**

(72) Erfinder : **Borgmann, Michael, Dipl.-Ing.**
**Dültgenstaler Strasse 14**
**W-5650 Solingen 19 (DE)**

(74) Vertreter : **Buse, Karl Georg, Dipl.-Phys. et al**
**Patentanwälte Dipl.-Phys. Buse Dipl.-Phys.**
**Mentzel Dipl.-Ing. Ludewig Unterdörnen 114**
**W-5600 Wuppertal 2 (DE)**

**EP 0 374 637 B1**

## Beschreibung

Die Erfindung bezieht sich auf eine Vorrichtung zum Zubereiten von Cappuccino (Milch-Kaffee-Getränk), die insbesondere als Zusatzvorrichtung für eine mit einer Heißdampfdüse versehenen Espressomaschine benutzbar ist, bei der der Düse des Heißdampfrohres der Espressomaschine eine Luftleiteinrichtung derart zugeordnet ist, daß die untere Öffnung der Luftleiteinrichtung zur Umspülung mit Heißdampf in der Nähe der Dampfaustrittsöffnung angeordnet ist und bei der das Heißdampfrohr einen hohlen, nach unten hin offenen Fortsatz aufweist, in den sowohl die Dampfaustrittsöffnung als auch die untere Öffnung der Luftleiteinrichtung einmünden, in dessen Hohlraum durch Ansaugen von Luft ein Dampf-Luft-Gemisch bildbar ist, das durch den Auslaß des Fortsatzes ausführbar und zur Bildung eines Milch-Dampf-Luft-Gemisches in einem mit Milch gefüllten Gefäß benutzbar ist, wobei der Fortsatz als gesondert hergestellter Körper ausgebildet ist, der mit der Düse des Heißdampfrohres verbindbar ist.

Eine derartige Vorrichtung zum Zubereiten von Cappuccino ist durch die DE-OS 3 644 519 bekanntgeworden. Diese bekannte Vorrichtung ist an sich vorteilhaft, weil sie in einfacher und wohlfeiler Weise hergestellt werden kann und vom Benutzer leicht an einer Espressomaschine zu befestigen ist. Diese bekannte Vorrichtung hat ferner den Vorteil, daß der beim Ausströmen des Heißdampfes entstehende Unterdruck sich auf den relativ kleinvolumigen Hohlraum des Fortsatzes konzentriert, so daß sich ein einwandfreies Ansaugen der Luft über die Luftleiteinrichtung ergibt. Die Wandungen des Hohlraumes des Fortsatzes kommen mit Milch überhaupt nicht in Verbindung, weil der über die Dampfaustrittsöffnung in den Hohlraum des Fortsatzes einströmende Heißdampf dieses verhindert. Damit ist sowohl ein Ansetzen von Milch an den Begrenzungswandungen des Hohlraumes ausgeschlossen, als auch ein Zusetzen von dort vorhandenen Öffnungen durch die Milch.

Bei einer der Ausführungsformen der Vorrichtung zum Zubereiten von Cappuccino nach der DE-PS 3 644 519 wird der Fortsatz als gesondert hergestellter Körper ausgebildet, der mit der Düse des Heißdampfrohres verbunden wird. Bei der konkreten Ausführungsform eines solchen Fortsatzes ist sein rückwärtiges Ende trichterförmig gestaltet und mit der Außenfläche einer kegeligen Düse des Heißdampfrohres verbunden. Dabei werden feste Verbindungen, insbesondere Klebungen eingesetzt. An sich ist die Verwendung eines gesondert hergestellten Fortsatzes vorteilhaft, weil man bei seiner Herstellung die für ihn günstigsten Werkstoffe aussuchen kann und weil man in der Formgebung weitgehend frei ist. Auf der anderen Seite ist es nachteilig, daß eine feste Verbindung dieses Fortsatzes mit der Düse erfolgen muß. Für die Herstellung einer solchen festen und dichten Verbindung zwischen den beiden genannten Teilen ist somit ein zusätzlicher Werkstoff, z.B. ein Klebstoff, erforderlich. Darüber hinaus erschwert der fest mit der Düse verbundene Fortsatz die Reinigung des Hohlraumes des Fortsatzes. Dieser ist praktisch nur durch den Auslaß zugänglich. Dadurch können die Wandungen des Hohlraumes nur sehr schwer gesäubert werden.

Der Erfindung liegt die Aufgabe zugrunde, eine Vorrichtung zum Zubereiten von Cappuccino der eingangs näher gekennzeichneten Art weiter zu verbessern, wobei die angeführten Vorteile der bekannten Ausführungsform der Vorrichtung beibehalten bleiben sollen, wobei jedoch der Fortsatz so gestaltet werden soll, daß er in einfachster Weise mit der Düse des Heißdampfrohres und/oder der Luftleiteinrichtung verbunden werden kann.

Zur Lösung dieser Aufgabe wird erfindungsgemäß vorgeschlagen, den Fortsatz als elastischen Körper auszubilden, der Bohrungen zum abgedichteten Einführen der Düse und des vorderen Endes der Luftleiteinrichtung aufweist. Diese Art der Verbindung des Fortsatzes mit den zugehörigen Teilen hat gegenüber dem Bekannten erhebliche Vorteile. So wird zunächst auf eine feste, dauerhafte Verbindung verzichtet. Dadurch kommen auch zusätzliche Verbindungselemente, wie Klebstoffe od.dgl. ganz in Fortfall. Da erfindungsgemäß der Fortsatz als elastischer Körper ausgebildet wird, kann man ihn nicht nur in einfacher Weise mit der Düse bzw. dem vorderen Ende der Luftleiteinrichtung verbinden sondern bei der Herstellung einer Verbindung erfolgt zugleich ein Abdichten, weil sich Bereiche des elastischen Fortsatzes dichtend an die benachbarten Flächen der Düse bzw. der Luftleiteinrichtung anlegen. Die Herstellung der Verbindung zwischen dem Fortsatz einerseits und der Düse und der Luftleiteinrichtung andererseits erfolgt durch einfaches Aufstecken. Diese Art der Verbindung hat den weiteren großen Vorteil, daß bei Bedarf der Fortsatz jederzeit von der Düse bzw. von der Luftleiteinrichtung abgenommen werden kann. Auf diese Weise läßt sich ein problemloses Reinigen des Fortsatzes ermöglichen, wobei nach erfolgter Reinigung des Fortsatzes dieser in einfachster Weise wieder durch Aufstecken mit der Düse und der Luftleiteinrichtung verbunden werden kann.

Es empfiehlt sich, den Fortsatz als einstückigen Hohlkörper aus einem gummielastischen Werkstoff zu fertigen, dessen Hohlraum auf seiner dem Heißdampfrohr zugekehrten Seite durch eine Außenwand begrenzt ist, in der die Bohrungen liegen und dessen gegenüberliegenden anderer Außenwand den Auslaß aufweist. Ein derartiger einstückiger Körper kann in wirtschaftlicher Weise hergestellt werden.

Es empfiehlt sich, die die Bohrungen aufweisende Außenwand dickenmäßig um ein Vielfaches stärker zu halten als die gegenüberliegende andere Außenwand. Auf diese Weise wird eine große Kontaktfläche zwischen den Begrenzungswandungen der Bohrungen einerseits und den Umfangsflächen der Düse und der Luftleitein-

EP 0 374 637 B1

richtung andererseits erzielt.

Zweckmäßig ist es dabei, wenn die Bohrungen in der dicken Außenwand mit Abstand nebeneinanderliegend angeordnet sind.

Es empfiehlt sich, die eine der beiden Seitenwandungen des Fortsatzes einen in Richtung auf den Auslaß des Fortsatzes geneigten Bereich aufweisen zu lassen. Auf diese Weise wird die über die Luftleiteinrichtung eingesaugte Luft in den Bereich des Hohlraumes des Fortsatzes gebracht, der vor der Austrittsöffnung der Düse des Heißdampfrohres liegt.

Die Luftleiteinrichtung ist vorzugsweise ein gerader, auf Länge geschnittener Rohrabschnitt, dessen eines Ende in der Bohrung des Fortsatzes durch Klemmung festgehalten ist. Ein solcher Rohrabschnitt läßt sich in äußerst wirtschaftlicher Weise herstellen; irgendwelche Bearbeitungen des Rohrabschnittes sind ebenso wenig erforderlich wie Verbindungsmittel zum Festhalten dieses Rohrabschnittes am Fortsatz. Vielmehr wird das eine Ende des Rohrabschnittes einfach in die zugeordnete Bohrung der einen Wandung des Fortsatzes eingesteckt. Dadurch wird nicht nur ein Festlegen durch Klemmung erzielt sondern zugleich auch eine Abdichtung.

Bei der Fertigung der Luftleiteinrichtung aus einem Rohrabschnitt hat die Luftleiteinrichtung über ihre ganze Länge eine gleiche Querschnittsfläche. Daraus folgt, daß bei dieser Ausführungsform pro Zeiteinheit eine ganz bestimmte Menge an Luft hindurchströmt. Bei manchen Anwendungen ist die konstante große Luftzufuhr bei der Herstellung eines Dampf-Luft-Gemisches nicht erwünscht. Um hier Abhilfe zu schaffen, wird nach einem weiteren Vorschlag der Erfindung dem oberen, die Einlaßöffnung aufweisenden Ende der Luftleiteinrichtung eine abnehmbare Abdeckung zugeordnet, die einen zur Atmosphäre hin offenen Durchbruch aufweist. Dieser steht mit dem durchlaufenden Hohlraum der Luftleiteinrichtung in Verbindung. Dabei ist die Querschnittsfläche des Durchbruches der Abdeckung kleiner als die des Hohlraumes. Dies bedeutet, daß dann, wenn die Abdeckung auf der Einlaßöffnung der Luftleiteinrichtung angebracht ist, wesentlich weniger Luft durch die Luftleiteinrichtung in den Hohlraum des Fortsatzes strömt.

Bei der bevorzugten Ausführungsform der Erfindung ist die Abdeckung aus einem elastischen Werkstoff gefertigt und durch Klemmkraft am oberen Ende der Luftleiteinrichtung festgehalten. Eine solche Ausbildung gestattet bei Bedarf ein einfaches Aufstecken der Abdeckung auf das obere Ende der Luftleiteinrichtung und damit eine Begrenzung der wirksamen Querschnittsfläche für die durch die Luftleiteinrichtung dem Fortsatz zugeführte Luftmenge.

Es empfiehlt sich, die Abdeckung als haubenförmigen Körper auszubilden, dessen unterer Bereich das obere Ende der Luftleiteinrichtung klemmend umgreift und dessen Decke vorzugsweise in ihrer Mitte liegend den Durchbruch aufweist.

Dabei ist es vorteilhaft, die Decke halbkugelförmig gekrümmt auszubilden und in ihrem Scheitelpunkt den Durchbruch aufweisen zu lassen.

Bei einer abgewandelten Ausführungsform der Erfindung ist dagegen die Abdeckung als aus einem elastischen Werkstoff gefertigter Körper ausgebildet, dessen Stiel klemmend mit den Innenwandungen des Hohlraumes der Luftleiteinrichtung zusammenwirkt und dessen Pilzkopf mit seiner Unterkante an der Stirnfläche der Luftleiteinrichtung anliegt. Dabei sind sowohl der Pilzkopf als auch der Stiel von einer durchgehenden Bohrung durchsetzt. Bei dieser Ausführungsform der Abdeckung erfolgt somit kein Umgreifen der Außenfläche der Luftleiteinrichtung sondern der Stiel der pilzförmigen Abdeckung wird in den Hohlraum der Luftleiteinrichtung eingesteckt und zwar soweit, bis die Unterkante des Pilzkopfes an der Stirnfläche der Luftleiteinrichtung anliegt.

Bei beiden Ausführungsformen der Abdeckung erfolgt ein gleichbleibender Durchsatz von Luft pro Zeiteinheit. Dies deshalb, weil keine Möglichkeit gegeben ist, die wirksame Querschnittsfläche des Durchbruches oder der nachgeschalteten Bohrung zu verändern.

Um hier dem Benutzer die Möglichkeit zu geben, die wirksame Querschnittsfläche der Abdeckung bzw. der Luftleiteinrichtung zu verändern, wird nach einem weiteren Vorschlag der Erfindung der Abdeckung ein Regelglied zugeordnet. Durch dieses Regelglied kann die wirksame Querschnittsfläche der durchgehenden Bohrung der Abdeckung verändert werden.

Hinsichtlich der Ausbildung und der Gestalt eines solchen Regelgliedes ergeben sich mehrere Möglichkeiten. Nach einem ersten Vorschlag der Erfindung ist ein solches Regelglied als einfacher Längsschieber ausgebildet, der beispielsweise plattenförmig gehalten ist. In der Abdeckung ist dann ein dem Querschnitt des Längsschiebers angepaßter Schlitz angeordnet. Durch diesen kann der Längsschieber eingesteckt bzw. eingeschoben werden. Die Begrenzungskanten des Schlitzes dienen dabei zur Führung des Längsschiebers. Durch mehr oder weniger weites Hineinschieben kann dann die wirksame Querschnittsfläche der durchgehenden Bohrung der Abdeckung verändert werden und zwar zwischen einem Null- und einem Maximalwert. Im letztgenannten Falle ist der Schieber so weit zurückgezogen, daß die volle Querschnittsfläche der Bohrung zum Durchtritt der Luft zur Verfügung steht.

Bei einer Alternativlösung der Erfindung ist das Regelglied als Drehschieber ausgebildet. Ein solcher Dreh-

3

schieber kann beispielsweise um eine Achse geschwenkt werden. Dabei ist diese Achse z.B. im Pilzkopf der Abdeckung gelagert. Bei der Verschwenkung des Drehschiebers verändert dieser die wirksame Querschnittsfläche der Bohrung der Abdeckung, wobei wiederum die Anordnung des Drehschiebers so getroffen werden kann, daß eine Luftregelung zwischen Null und einem Maximum herbeigeführt werden kann.

Ferner ist es möglich, einer einzigen Luftleiteinrichtung mehrere Abdeckungen zuzuordnen, die unterschiedlich bemessene Durchbrüche oder Bohrungen aufweisen, von denen vom Benutzer wahlweise eine Abdeckung auf die Luftleiteinrichtung aufgesteckt werden kann. Auf diese Weise kann der Benutzer diejenige Abdeckung auf die Luftleiteinrichtung aufstecken, die für die jeweiligen Verhältnisse am günstigsten ist.

Auf den Zeichnungen ist die Erfindung in mehreren Ausführungsbeispielen dargestellt und zwar zeigen:

Fig. 1 eine elektrisch betriebene Espressomaschine in schaubildlicher Darstellung in einer ersten Ausführungsform einer erfindungsgemäßen Zusatzvorrichtung für die Zubereitung von Cappuccino,

Fig. 2 in vergrößertem Maßstab, teilweise in Seitenansicht und teilweise geschnitten die Zusatzvorrichtung für die Zubereitung von Cappuccino für eine Espressomaschine gemäß der Fig. 1 bei ihrem Eintauchen in ein mit Milch gefülltes Gefäß,

Fig. 3 in vergrößertem Maßstab, in schaubildlicher Ansicht und teilweise geschnitten eine zweite Ausführungsform einer Zusatzvorrichtung für die Zubereitung von Cappuccino, die bei einer Espressomaschine gemäß der Fig. 1 Anwendung finden kann,

Fig. 4 die Zusatzvorrichtung zum Zubereiten von Cappuccino nach der Fig. 3 in Seitenansicht,

Fig. 5 eine Draufsicht auf die Zusatzvoprrichtung für die Zubereitung von Cappuccino nach den Fig. 3 und 4 der Zeichnungen und

Fig. 6 im Schnitt und im stark vergrößerten Maßstab eine abgewandelte Ausführungsform einer Abdeckung, die mit dem oberen Ende der Luftleiteinrichtung einer Zusatzvorrichtung für die Zubereitung von Cappuccino aufgesteckt werden kann.

Es sei zunächst erwähnt, daß in den Figuren der Zeichnungen nur diejenigen Teile einer elektrisch betriebenen Espressomaschine dargestellt sind, welche für das Verständnis der Erfindung Bedeutung haben. So fehlen in den Zeichnungen die elektrischen Anschlüsse. Von den vorhandenen Regel-, Steuer- und Kontrolleinrichtungen sind nur die von außen sichtbaren Teile derselben dargestellt. Im übrigen können alle in den Zeichnungen fehlenden Teile einschl. der Einrichtung zum Zuführen von Wasser für die Espressoherstellung einen an sich bekannten Aufbau haben.

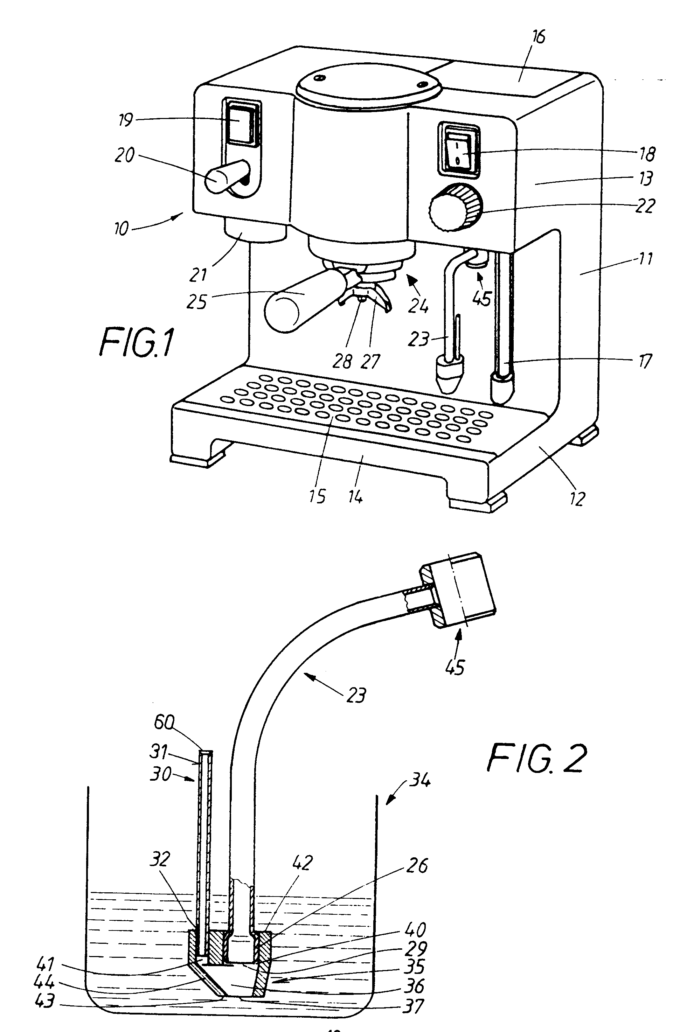

Dem Ausführungsbeispiel nach der Fig. 1 der Zeichnung ist eine generell mit 10 bezeichnete Espressomaschine zugrundegelegt. Diese Espressomaschine hat einen aufrechten Gehäuseteil 11, der auf seiner einer Aufstellfläche, wie einem Tisch, zugeordneten Seite in einen waagerecht verlaufenden Fuß 12 übergeht. Auf der gegenüberliegenden anderen Seite hat die Espressomaschine einen verbreiterten Oberteil 13.

Im Fuß 12 des Gehäuseteiles 11 ist eine Auffangschale 14 für heruntertropfende Flüssigkeit vorhanden, die durch eine Abdeckung 15 mit Löchern bzw. Durchbrüchen nach oben hin verschlossen ist. Die Aufangschale 14 mit der Abdeckung 15 kann bei Bedarf vom Fuß 12 entfernt werden, beispielsweise um die angesammelte Flüssigkeit wegzuschütten oder aber um das Innere der Auffangschale zu reinigen.

Im Bereich der Oberfläche des verbreiterten Oberteiles 13 der Espressomaschine 10 ist eine Klappe 16 angeordnet, unter der ein herausnehmbarer Frischwasserbehälter liegt. Dieser in der Fig. 1 der Zeichnung nicht sichtbare Frischwasserbehälter kann somit aus dem Gehäuse der Espressomaschine entfernt werden, damit er z.B. unter einer Wasserleitung mit Frischwasser gefüllt werden kann. Zu diesem Zweck ist er mit einem abklappbaren Handgriff versehen. Damit der Benutzer der Espressomaschine 10 auch bei geschlossener Klappe 16 feststellen kann, wieviel Frischwasser sich noch im Behälter befindet, wird ein Wasserstandsschauglas 17 benutzt, welches in dem aufrechten Gehäuseteil 11 der Espressomaschine 10 angeordnet ist.

An der Vorderfront des verbreiterten Oberteiles 13 ist zunächst ein Ein- und Ausschalter 18 angeordnet, mit dem die Espressomaschine 10 an ein Leitungsnetz angeschlossen werden kann. Auf der gegenüberliegenden anderen Seite ist die Espressomaschine 10 mit einer Aufheizkontrolleuchte 19 versehen. Sobald das Wasser in der Espressomaschine 10 die erforderliche Temperatur erreicht hat, erlischt die Aufheizkontrolleuchte 19. Unter der Aufheizkontrolleuchte 19 liegt der Espressodosierhebel 20. Mittels diesem kann von dem Benutzer die gewünschte Menge Espresso in eine Tasse oder generell in ein Auffanggefäß überführt werden. Die Ausbildung und die Wirkungsweise der mit dem Espressodosierhebel 20 der Espressomaschine 10 zusammenwirkenden Teile ist grundsätzlich bekannt, so daß auf die Angabe von Details verzichtet werden kann.

Im Bereich der Unterseite des verbreiterten Oberteiles 13 der Espressomaschine 10 ist noch ein Espressostopfer 21 von im wesentlichen zylindrischer Gestalt angeordnet. Mit diesem Espressostopfer kann das Kaffeemehl im Filter in einfacher Weise angedrückt werden.

Unterhalb des Ein- und Ausschalters 18 ist noch ein Dampfregler 22 vorhanden, der im dargestellten Ausführungsbeispiel als Drehknopf ausgebildet ist und der von einer Null-Stellung in eine Maximalstellung verdreht werden kann. Es ist dabei eine stufenlose Einstellmöglichkeit vorgesehen. Mit Hilfe dieses Dampfreglers 22 kann erhitzer Dampf durch das vorzugsweise schwenkbar angeordnete Heißdampfrohr 23 herausgeführt werden. Dieser Heißdampf wird zum Herstellen von Cappuccino in noch zu schildernder Weise herangezogen. Daneben ist mit ihm nach wie vor ein Vorwärmen von Gefäßen möglich.

Zu der Espressomaschine 10 gehört auch ein generell mit 24 bezeichneter Filterträger, der einen Aufnahmeraum für ein Filtersieb aufweist. Während der Aufnahmeraum des Filterträgers 24 aus einem gut wärmeleitenden Werkstoff, beispielsweise aus Metall gefertigt ist, wird sein Handgriff 25 aus einem schlecht wärmeleitenden Werkstoff hergestellt. Zwischen den beiden Teilen 24 und 25 liegt ein Verbindungsstück, in dessen Bereich ein Festhalter angeordnet ist. Der Filterträger 24 kann in bekannter Weise z.B. unter Benutzung einer bajonettverschlußartigen Verbindung lösbar mit dem Gehäuse der Espressomaschine 10 verbunden werden. Die Espressomaschine 10 kann im gewählten Ausführungsbeispiel einen Verteiler 27 für das fertige Getränk, der mittels einer Halteschraube 28 am Gehäuse der Espressomaschine 10 lagegesichert ist, aufweisen.

Wie schon erwähnt, kann der Heißdampf des Heißdampfrohres 23 auch zum Zubereiten von Cappuccino herangezogen werden. Zu diesem Zweck ist eine Zusatzvorrichtung vorgesehen, die ein einfaches und daher problemloses Zubereiten von Cappuccino ermöglicht. Die Fig. 1 und 2 der Zeichnung zeigen eine erste Ausführungsform einer solchen Zusatzvorrichtung.

Aus der Fig. 2 der Zeichnung ist ersichtlich, daß dem Heißdampfrohr 23 ein Fortsatz 35 zugeordnet ist, in den sowohl die Dampfaustrittsöffnung 29 der Düse 26 als auch das untere Ende 32 einer Luftleiteinrichtung 30 einmünden. Die Luftleiteinrichtung 30 ist im Bereich ihres unteren Endes offen. Der Hohlraum des Fortsatzes 35 ist dabei mit 36 und sein Auslaß mit 37 bezeichnet.

Erfindungsgemäß ist der Fortsatz 35 als elastischer Körper ausgebildet, der Bohrungen 40, 41 zum abgedichteten Einführen der Düse 26 des Heißdampfrohres 23 und des unteren Endes 32 der Luftleiteinrichtung 30 aufweist.

Im Ausführungsbeispiel nach der Fig. 2 der Zeichnung ist der Fortsatz 35 ein einstückiger Hohlkörper auf einem gummielastischen Werkstoff. Sein Hohlraum 36 ist auf seiner dem Heißdampfrohr 23 zugekehrten Seite durch eine Außenwand 42 begrenzt, in der die Bohrungen 40 bzw. 41 liegen. Die gegenüberliegende andere Außenwand 43 des Fortsatzes 35 weist dagegen den Auslaß 37 auf.

Aus der Fig. 2 der Zeichnung ist ferner ersichtlich, daß die die Bohrungen 40 bzw. 41 aufweisende Außenwand 42 des Fortsatzes 35 dickenmäßig um ein Vielfaches stärker ist als die gegenüberliegende andere Außenwand 43. Die Bohrungen 40 bzw. 41 sind in der Außenwand 42 des Fortsatzes 35 mit Abstand nebeneinanderliegend angeordnet.

Die eine der beiden Seitenwandungen des Fortsatzes 35 weist einen in Richtung auf den Auslaß 37 des Fortsatzes 35 geneigten Bereich 44 auf. Auf diese Weise wird die durch die Einlaßöffnung 60 des oberen Endes 31 der Luftleiteinrichtung 30 angesaugte Luft in Richtung auf den Auslaß bzw. vor die Austrittsöffnung 29 der Düse 26 des Heißdampfrohres 26 gelenkt.

Die Anbringung des Fortsatzes 35 an der Düse 26 bzw. der Luftleiteinrichtung 30 geschieht in einfacher Weise dadurch, daß die Enden dieser beiden Teile in die Bohrungen 40 bzw. 41 eingesteckt werden. Durch die beträchtliche Dicke der Begrenzungswand 42 ergibt sich eine große Kontaktfläche zwischen den Innenwandungen der Bohrungen 40 bzw. 41 und der benachbarten Umfangsfläche der Düse und des unteren Endes 32 der Luftleiteinrichtung 30.

Aus der Fig. 2 der Zeichnung ergibt sich ferner, daß im gewählten Ausführungsbeispiel die Luftleiteinrichtung 30 ein gerader, auf Länge geschnittener Rohrabschnitt ist, dessen unteres Ende 32 in der Bohrung 41 des Fortsatzes 35 durch Klemmung festgehalten wird. Dabei wird zugleich eine Abdichtung der Bohrung erzielt, ohne daß zusätzliche Dichtungsmittel erforderlich sind. Vielmehr legt sich der gummielastische Werkstoff des Fortsatzes 35 dichtend an die Umfangsfläche des in die Bohrung 41 eingesteckten unteren Endes 32 der Luftleiteinrichtung 30.

Aus der gleichen Fig. 2 der Zeichnung ist auch ersichtlich, daß die Düse 26 des Heißdampfrohres 23 durchmessermäßig erweitert ist. Auf diese Weise entsteht eine nicht näher bezeichnete Schulter. Auf diese können sich Teile des gummielastischen Materials der Außenwand 42 des gummielastischen Fortsatzes legen.

Auf der der Düse 26 gegenüberliegenden anderen Seite hat das Heißdampfrohr eine generell mit 45 bezeichnete Kupplung. Mit dieser erfolgt das Anschließen an die zugeordneten Teile der Espressomaschine 10. Die dargestellte Kupplung 45 ist nur eine der möglichen Ausführungsformen. Es können ohne weiteres auch andere, in der einschlägigen Technik bekannte Kupplungen eingesetzt werden.

Da der aus einem gummielastischen Werkstoff gefertigte Fortsatz durch einfaches Aufstecken mit der Düse 26 bzw. mit dem unteren Ende 32 der Luftleiteinrichtung 30 verbunden ist, kann er bei Bedarf ohne weiteres von diesen Teilen entfernt werden, beispielsweise um ihn zu säubern oder aber wenn der aus dem Heißdampfrohr 23 austretende heiße Dampf nur zum Erwärmen von Gefäßen benutzt werden soll. In diesem Falle ist die Bildung eines Dampf-Luft-Gemisches in dem Hohlraum 36 des Fortsatzes 35 nicht zwingend erforderlich.

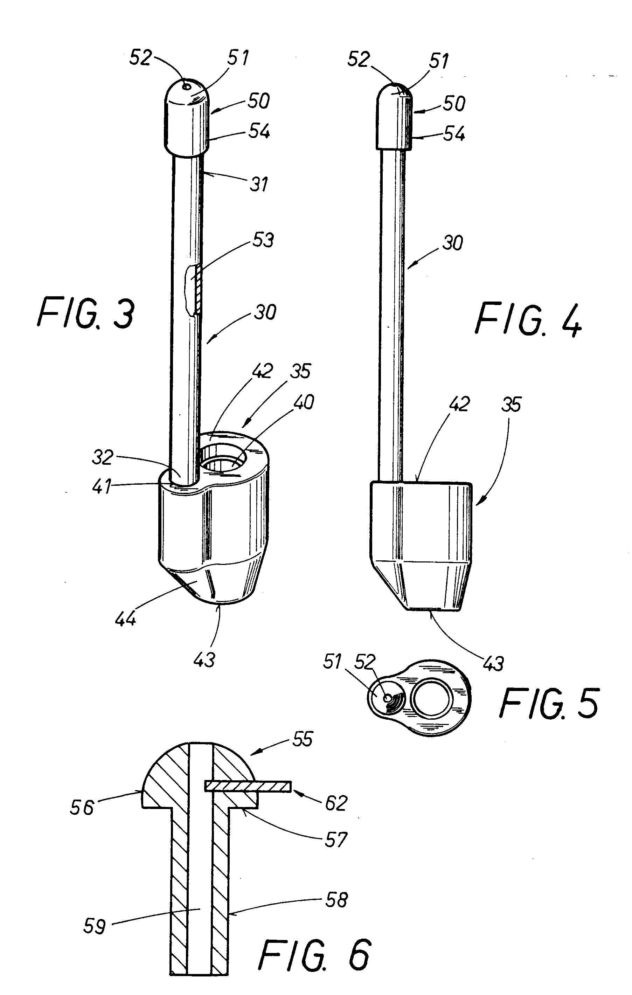

Die Luft-leiteinrichtung 30 hat einen durchlaufenden Hohlraum von gleich großer Querschnittsfläche in jedem Bereich. In der Fig. 2 ist die Einlaßöffnung 60 der Luftleiteinrichtung etwa gleich groß wie die Querschnittsfläche des Hohlraumes 53. Bei dieser Ausbildung wird verhältnismäßig viel Luft durch die Einlaßöffnung 60 der Luftleiteinrichtung 30 angesaugt. Um die Menge der angesaugten Luft reduzieren zu können, sind in den Fig. 3 bis 6 der Zeichnung zwei weitere Ausführungsformen einer Zusatzvorrichtung zur Herstellung von Cappuccino dargestellt.

Bei dieser abgewandelten Ausführungsform der Luftleiteinrichtung 30 nach den Fig. 3 bis 5 der Zeichnungen ist dem oberen, die Einlaßöffnung 30 aufweisenden Ende 31 der Luftleiteinrichtung 30 eine abnehmbare Abdeckung 50 zugeordnet. Diese hat einen zur Atmosphäre hin offenen Durchbruch 52, der mit dem durchlaufenden Hohlraum 53 der Luftleiteinrichtung 30 in Verbindung steht. Dabei ist aber die Querschnittsfläche des Durchbruches 52 wesentlich kleiner als die des Hohlraumes 53. Bei angebrachter Abdeckkappe 50 wird daher der Luftleiteinrichtung 30 und damit dem Hohlraum 36 des Fortsatzes 35 wesentlich weniger Luft zugeführt als bei fehlender Abdeckung.

Im Ausführungsbeispiel nach den Fig. 3 bis 5 der Zeichnung ist die Abdeckung 50 ebenfalls aus einem elastischen Werkstoff gefertigt und durch Klemmkraft am oberen Ende 31 der Luftleiteinrichtung 30 festgehalten. Dabei ist die Abdeckung 50 als haubenförmiger Körper ausgebildet, dessen unterer Bereich 54 das obere Ende 31 der Luftleiteinrichtung 30 klemmend umgreift, während die Decke 51 vorzugsweise in ihrer Mitte liegend den Durchbruch 52 aufweist. Im Ausführungsbeispiel ist die Decke 51 halbkugelförmig gekrümmt und hat in ihrem Scheitelpunkt den Durchbruch 52.

Bei der abgewandelten Ausführungsform der Zusatzvorrichtung nach der Fig. 6 der Zeichnungen ist die jetzt mit 55 bezeichnete Abdeckung ebenfalls aus einem elastischen Werkstoff gefertigt, jedoch ist diese Abdeckung 55 pilzförmig gestaltet. Der Pilzkopf ist dabei mit 56 und der Stiel mit 58 bezeichnet. Bei aufgesetzter Abdeckung 55 wirkt der Stiel 58 klemmend mit den Innenwandungen des Hohlraumes 53 der Luftleiteinrichtung zusammen. Der Pilzkopf 56 liegt dagegen mit seiner Unterkante 57 an der Stirnfläche der Luftleiteinrichtung 30 an. Wie die Fig. 6 gut erkennen läßt, sind der Pilzkopf 56 und der Stiel 58 von einer durchgehenden Bohrung 59 durchsetzt.

Um nun bei Bedarf die wirksame Querschnittsfläche dieser durchgehenden Bohrung 59 der Abdeckung 55 verändern zu können, ist ein Regelglied 62 vorgesehen. Ein solches Regelglied kann z.B. als Schieber ausgebildet sein. Ein solcher plattenförmig gestalteter Schieber wird in einer schlitzartigen Ausnehmung des Pilzkopfes 56 an dessen Seitenwandungen geführt. Durch mehr oder weniger weites Hereinragen der Vorderseite des Schiebers in die Bohrung 59 kann die wirksame Querschnittsfläche verändert werden und zwar von Null bis zu einem Maximalwert. In der Null-Stellung verschließt der Schieber den Gesamtquerschnitt der Bohrung 59 und verhindert damit ein Ansaugen von Luft. In der Maximalstellung ist der Schieber so weit herausgezogen, daß die gesamte Querschnittsfläche der Bohrung 59 freigegeben ist.

Bei einer Alternativlösung kann anstelle eines Schiebers ein Drehschieber benutzt werden, der in dem Pilzkopf drehbar oder schwenkbar gelagert ist. Zu diesem Zweck ist im Pilzkopf eine in der Fig. 6 der Einfachheit halber fortgelassene Drehachse angeordnet. Auch in diesem Falle kann durch den Drehschieber die wirksame Querschnittsfläche der Bohrung 29 von Null auf einen Maximalwert verändert werden.

Nach einem weiteren Vorschlag der Erfindung sind einer einzigen Luftleiteinrichtung 30 mehrere Abdeckungen 50 bzw. 55 zugeordnet, die unterschiedlich bemessene Durchbrüche 52 oder Bohrungen 59 aufweisen. Von dem Benutzer wird dann wahlweise eine dieser Abdeckungen 50 bzw. 55 auf das obere Ende 32 der Luftleiteineinrichtung 30 aufgesteckt.

Die erfindungsgemäß ausgebildeten Vorrichtungen zum Zubereiten von Cappuccino arbeiten wie folgt:

Die Espressomaschine 10 gemäß der Fig. 1 der Zeichnung wird in üblicher Weise - also wie bei der Zubereitung von Espresso - vorbereitet und eingestellt. Dies bedeutet, daß nach Ablauf der Einstellzeit beim Betätigen des Dampfreglers 22 aus der Dampfaustrittsdüse 29 des Heißdampfrohres 23 Heißdampf austreten kann. Somit strömt nach dem Betätigen des Dampfreglers 22 Heißdampf durch das Heißdampfrohr 23. Dieser tritt durch die Dampfaustrittsdüse 29 der Düse 26 aus und gelangt in den Hohlraum 36 des Fortsatzes 35. Dort entsteht ein Unterdruck. Es erfolgt somit ein Ansaugen von Luft über die Einlaßöffnung 60 des oberen Endes 31 der Luftleiteinrichtung 30. In dem Hohlraum des Fortsatzes 35 entsteht somit ein Dampf-Luft-Gemisch, das durch den Auslaß 37 des Fortsatzes 35 ausgeführt werden kann. Zur Bildung des gewünschten Dreier-Gemisches - also des Milch-Dampf-Luft-Gemisches - wird der Fortsatz 35 - wie in der Fig. 2 der Zeichnung dargestellt - mit seinem Auslaß 37 in ein externes, teilweise mit Milch gefülltes Gefäß 34 eingebracht. Beim bestimmungsgemäßen Gebrauch der Vorrichtung zum Zubereiten von Cappuccino entsteht somit in dem mit Milch gefüllten Gefäß 34 der gewünschte Milchschaum. Dabei ergibt sich der Vorteil, daß die Innenwandungen des Hohlraumes 36 des Fortsatzes 35 und die darin einmündenden Öffnungen der Düse und der Luftleiteinrichtung mit der Milch überhaupt nicht in Berührung kommen, so daß ein Festsetzen von Milchpartikelchen an den Innenwandungen des Hohlraumes 36 oder ein Zusetzen der in den Hohlraum einmündenden Öffnungen durch diese Milchpartikelchen entfällt. Sollte trotzdem ein Reinigen des Fortsatzes 35 erwünscht sein, dann kann durch einfaches Abziehen dieser Fortsatz 35 von der Tülle 26 bzw. von dem unteren Ende 32 der Luftleiteinrichtung 30 entfernt werden. Nach erfolgter Reinigung des Fortsatzes kann dieser durch einfaches Aufstecken wieder mit den genannten Teilen, nämlich der Düse 26 und dem unteren Ende 32 der Luftleiteinrichtung 30 verbunden werden. Irgendwelche Verbindungs- oder Dichtungsmittel sind dabei nicht erforderlich. Sollte die durch die Einlaßöffnung 60 der Luftleiteinrichtung zugeführte Luftmenge zu groß sein, dann kann die wirksame Querschnittsfläche im Bereich der Einlaßöffnung 60 der Luftleiteinrichtung verkleinert werden und zwar dadurch, daß entweder die Abdeckkappe 50 oder die pilzförmige Abdeckung 55 auf das obere Ende 31 der Luftleiteinrichtung 30 aufgesteckt bzw. eingesteckt werden.

Wie bereits erwähnt, sind die dargestellten Ausführungen nur beispielsweise Verwirklichungen der Erfindung und diese nicht darauf beschränkt. Vielmehr sind noch mancherlei andere Ausführungen und Anwendungen möglich. Dies gilt insbesondere für die Ausbildung und Gestalt des Fortsatzes 35 und auch für die Abdeckung des oberen Endes 31 der Luftleiteinrichtung 30. Insbesondere ist es auch möglich, die dargestellte Zusatzvorrichtung zum Zubereiten von Cappuccino bei anderen an sich bekannten Espressomaschinen als der dargestellten zu benutzen.

Bezugszeichenliste :

| | | |
|---|---|---|
| 10 | - Espressomaschine |
| 11 | - aufrechter Gehäuseteil |
| 12 | - Fuß |
| 13 | - verbreiterter Oberteil |
| 14 | - Auffangschale |
| 15 | - Abdeckung (von 14) |
| 16 | - Klappe |
| 17 | - Wasserstandsschauglas |
| 18 | - Ein- und Ausschalter |
| 19 | - Aufheiz-Kontroll-Leuchte |
| 20 | - Espressodosierhebel |
| 21 | - Espressostopfer |
| 22 | - Dampfregler |
| 23 | - Heißdampfrohr |
| 24 | - Filterträger |
| 25 | - Handgriff |
| 26 | - Düse |
| 27 | - Verteiler |
| 28 | - Halteschraube (für 27) |
| 39 | - Dampfaustrittsdüse |
| 30 | - Luftleiteinrichtung |
| 31 | - oberes Ende (von 30) |
| 32 | - unteres Ende (von 30) |
| 33 | - Milch |
| 34 | - Gefäß |
| 35 | - Fortsatz (von 23) |
| 36 | - Hohlraum (von 35) |
| 37 | - Auslaß (in 35) |
| 40 | - Bohrung (in 35) |
| 41 | - Bohrung (in 35) |
| 42 | - obere Außenwand (von 35) |
| 43 | - untere Außenwand (von 35) |
| 44 | - geneigter Bereich /(an 35) |

| 45 | - Kupplung (an 23) |
|---|---|
| 50 | - Abdeckung (von 60) - I. Ausführungsform (Fig. 1 bis 5) |
| 51 | - Decke (von 50) |
| 52 | - Durchbruch (in 51) |
| 53 | - Hohlraum (von 30) |
| 54 | - unterer Bereich (von 50) - Mantelfläche |
| 55 | - pilzförmige Abdeckung (Fig. 6) |
| 56 | - Pilzkopf (von 56) |
| 58 | - Stiel (von 55) |
| 59 | - durchgehende Bohrung (von 55) |
| 60 | - Einlaßöffnung (von 30) |
| 61 | - Auslaßöffnung (von 30) |

## Patentansprüche

1. Vorrichtung zum Zubereiten von Cappuccino (Milch-Kaffee-Getränk), die insbesondere als Zusatzvorrichtung für eine mit einer Heißdampfdüse versehenen Espressomaschine (10) benutzbar ist, bei der der Düse (26) des Heißdampfrohres (23) der Espressomaschine (10) eine Luftleiteinrichtung (30) derart zugeordnet ist, daß die untere Öffnung der Luftleiteinrichtung (30) zur Umspülung mit Heißdampf in der Nähe der Dampfaustrittsöffnung angeordnet ist und bei der das Heißdampfrohr (23) einen hohlen, nach unten hin offenen Fortsatz (35) aufweist, in den sowohl die Dampfaustrittsöffnung als auch die untere Öffnung der Luftleiteinrichtung (30) einmünden, in dessen Hohlraum durch Ansaugen von Luft ein Dampf-Luft-Gemisch bildbar ist, das durch den Auslaß des Fortsatzes (35) ausführbar und zur Bildung eines Milch-Dampf-Luft-Gemisches in einem mit Milch gefüllten Gefäß (34) benutzbar ist, wobei der Fortsatz (35) als gesondert hergestellter Körper ausgebildet ist, der mit der Düse (26) des Heißdampfrohres (23) verbindbar ist,
**dadurch gekennzeichnet,**
daß der Fortsatz (35) als elastischer Körper ausgebildet ist, der Bohrungen (40, 41) zum abgedichteten Einführen der Düse (26) und des vorderen Endes der Luftleiteinrichtung (30) aufweist.

2. Vorrichtung zum Zubereiten von Cappuccino nach Anspruch 1, dadurch gekennzeichnet, daß der Fortsatz (35) ein einstückiger Hohlkörper aus einem gummielastischen Werkstoff ist, dessen Hohlraum (36) auf seiner dem Heißdampfrohr (23) zugekehrten Seite durch eine Außenwand (42) begrenzt ist, in der die Bohrungen (40, 41) liegen und dessen gegenüberliegende andere Außenwand (43) den Auslaß (37) aufweist.

3. Vorrichtung zum Zubereiten von Cappuccino nach Anspruch 1 und 2, dadurch gekennzeichnet, daß die die Bohrungen (40, 41) aufweisende Außenwand (42) dickenmäßig um ein Vielfaches stärker ist als die gegenüberliegende andere Außenwand (43) und daß die Bohrungen (40, 41) mit Abstand nebeneinanderliegend angeordnet sind.

4. Vorrichtung zum Zubereiten von Cappuccino nach einem oder mehreren der vorangehenden Ansprüche, dadurch gekennzeichnet, daß die eine der beiden Seitenwandungen des Fortsatzes (35) einen in Richtung auf den Auslaß (37) des Fortsatzes (35) geneigten Bereich (44) aufweist.

5. Vorrichtung zum Zubereiten von Cappuccino nach Anspruch 1, dadurch gekennzeichnet, daß die Luftleiteinrichtung (30) ein gerader, auf Länge geschnittener Rohrabschnitt ist, dessen eines Ende in der Bohrung (41) des Fortsatzes (35) durch Klemmung festgehalten ist.

6. Vorrichtung zum Zubereiten von Cappuccino nach Anspruch 1, dadurch gekennzeichnet, daß dem oberen, die Einlaßöffnung (60) aufweisenden Ende (31) der Luftleiteinrichtung (30) eine abnehmbare Abdeckung (50) zugeordnet ist, die einen zur Atmosphäre hin offenen Durchbruch (52) aufweist, der mit dem durchlaufenden Hohlraum (53) der Luftleiteinrichtung (30) in Verbindung steht, wobei die Querschnittsfläche des Durchbruches (52) kleiner ist als die des Hohlraumes (53).

7. Vorrichtung zum Zubereiten von Cappuccino nach Anspruch 1 und 6, dadurch gekennzeichnet, daß die Abdeckung (50) aus einem elastischen Werkstoff gefertigt ist und durch Klemmkraft am oberen Ende (31) der Luftleiteinrichtung (30) festgehalten ist (Fig. 3 bis 5).

8. Vorrichtung zum Zubereiten von Cappuccino nach Anspruch 6 und 7, dadurch gekennzeichnet, daß die Abdeckung (50) als haubenförmiger Körper ausgebildet ist, dessen unterer Bereich (54) das obere Ende (31) der Luftleiteinrichtung (30) klemmend umgreift und dessen Decke (51) vorzugsweise in ihrer Mitte liegend den Durchbruch (52) aufweist (Fig. 3 bis 5).

EP 0 374 637 B1

9. Vorrichtung zum Zubereiten von Cappuccino nach Anspruch 8, dadurch gekennzeichnet, daß die Decke (51) halbkugelförmig gekrümmt ausgebildet ist und in ihrem Scheitelpunkt den Durchbruch (52) aufweist (Fig. 3 bis 5).

10. Vorrichtung nach Anspruch 6 und 7, dadurch gekennzeichnet, daß die Abdeckung (55) als aus einem elastischen Werkstoff gefertigter Körper ausgebildet ist, dessen Stiel (58) klemmend mit den Innenwandungen des Hohlraumes (53) der Luftleiteinrichtung (30) zusammenwirkt und dessen Pilzkopf (56) mit seiner Unterkante (57) an der Stirnfläche der Luftleiteinrichtung (30) anliegt und daß der Pilzkopf (56) und der Stiel (58) von einer durchgehenden Bohrung (59) durchsetzt sind (Fig. 6).

11. Vorrichtung zum Zubereiten von Cappuccino nach Anspruch 10, dadurch gekennzeichnet, daß die wirksame Querschnittsfläche der durchgehenden Bohrung (59) der Abdeckung (55) durch ein Regelglied (62) veränderbar ist.

12. Vorrichtung zum Zubereiten von Cappuccino nach Anspruch 11, dadurch gekennzeichnet, daß das Regeglied (62) (Fig. 8) als Schieber oder als Drehschieber ausgebildet ist.

13. Vorrichtung zum Zubereiten von Cappuccino nach Anspruch 6 bis 12, dadurch gekennzeichnet, daß einer einzigen Luftleiteinrichtung (30) mehrere Abdeckungen (50 bzw. 55) zugeordnet sind, die unterschiedlich bemessene Durchbrüche (52) oder Bohrungen (59) aufweisen, von denen vom Benutzer wahlweise eine Abdeckung (50 bzw. 55) auf die Luftleiteinrichtung (30) aufsteckbar ist.

**Claims**

1. An appliance for preparing cappuccino coffee (milk coffee drink) which can be used in particular as an ancillary appliance for an espresso machine (10) provided with a hot steam nozzle, wherein an air guide device (30) is associated with the nozzle (26) of the hot steam pipe (23) of the espresso machine (10) in such a way that the lower opening of the air guide device (30) is arranged for hot steam to flow therearound in the vicinity of the steam outlet opening and wherein the hot steam pipe (23) has a hollow, downwardly open extension (35) into which open both the steam outlet opening and also the lower opening of the air guide device (30) and in the cavity in which a steam-air mixture can be formed by virtue of air being sucked in, which mixture can be discharged through the outlet of the extension (35) and can be used to form a milk-steam-air mixture in a vessel (34) which is filled with milk, the extension (35) being in the form of a separately produced body which can be connected to the nozzle (26) of the hot steam pipe (23),
characterised in that
the extension (35) is in the form of an elastic body which has bores (40, 41) for the sealed introduction of the nozzle (26) and the front end of the air guide device (30).

2. An appliance for preparing cappuccino coffee according to claim 1 characterised in that the extension is an integral hollow body of a resilient material, the cavity (36) of which is defined on its side which is towards the hot steam pipe (23) by an outside wall (42) in which the bores (40, 41) are provided, while the oppositely disposed other outside wall (43) thereof has the outlet (37).

3. An appliance for preparing cappuccino coffee according to claim 1 and claim 2 characterised in that the outside wall (42) which has the bores (40, 41) is greater in thickness by a multiple than the oppositely disposed other outside wall (43) and that the bores (40, 41) are arranged at a spacing one beside the other.

4. An appliance for preparing cappuccino coffee according to one or more of the preceding claims characterised in that one of the two side walls of the extension (35) has a region (44) which is inclined towards the outlet (37) of the extension (35).

5. An appliance for preparing cappuccino coffee according to claim 1 characterised in that the air guide device (30) is a straight tube portion which is cut to length and of which one end is held fast by clamping in the bore (41) of the extension (35).

6. An appliance for preparing cappuccino coffee according to claim 1 characterised in that associated with the upper end (31) of the air guide device (30), which has an inlet opening (60), is a removable cover (50) having an opening (52) which is open to the atmosphere and which communicates with the cavity (53) extending through the air guide device (30), the cross-sectional area of the opening (52) being less than that of the cavity (53).

7. An appliance for preparing cappuccino coffee according to claim 1 and claim 6 characterised in that the cover (50) is made from an elastic material and is held fast by a clamping force to the upper end (31) of the air guide device (30) (Figures 3 to 5).

8. An appliance for preparing cappuccino coffee according to claim 6 and claim 7 characterised in that the cover (50) is in the form of a cap-like body whose lower region (54) clampingly embraces the upper end (31) of the air guide device (30) and whose top (51) preferably has the opening (52) at its centre (Figures 3 to 5).

9. An appliance for preparing cappuccino coffee according to claim 8 characterised in that the top (51) is of a hemispherically curved configuration and has the opening (52) at its apex (Figures 3 to 5).

10. An appliance according to claim 6 and claim 7 characterised in that the cover is in the form of a body which is made from an elastic material and whose shank (58) clampingly co-operates with the inside walls of the cavity (53) of the air guide device (30) and whose mushroom head (56) bears with its bottom edge (57) against the end face of the air guide device (30) and that the mushroom head (56) and the shank (58) have a continuous bore (59) extending therethrough (Figure 6).

11. An appliance for preparing cappuccino coffee according to claim 10 characterised in that the effective cross-sectional area of the bore (59) extending through the cover (55) is variable by a regulating member (62).

12. An appliance for preparing cappuccino coffee according to claim 11 characterised in that the regulating member (62) (Figure 8) is in the form of a slider or a rotary slider.

13. An appliance for preparing cappuccino coffee according to claims 6 to 12 characterised in that associated with a single air guide device (30) are a plurality of covers (50 or 55) which have openings (52) or bores (59) of different dimensions and of which a cover (50 or 55) can be selectively fitted by the user onto the air guide device (30).


## Revendications

1. Dispositif pour préparer un cappuccino (boisson au lait et au café), utilisable en particulier comme dispositif d'appoint pour une machine à expresso (10), pourvue d'une buse'à vapeur surchauffée (10), pour lequel un dispositif de guidage d'air (30) est associé à la buse (26) du tube à vapeur surchauffée (23) de la machine à expresso (10), de façon que l'ouverture inférieure du dispositif de guidage d'air (30) servant à assurer un balayage avec de la vapeur surchauffée soit disposé à proximité de l'ouverture de sortie de vapeur et pour lequel le tube de vapeur surchauffée (23) présente un prolongement (35) creux, ouvert vers le bas, dans lequel débouchent tant l'ouverture de sortie de vapeur qu'également l'ouverture inférieure du dispositif de guidage d'air (30), dans l'espace creux duquel, par aspiration d'air, est susceptible de se former un mélange vapeur-air, qui peut être évacué par l'échappement du prolongement (35) et être utilisé pour former un mélange lait-vapeur dans un récipient (34) rempli de lait, le prolongement (35) étant réalisé sous forme sous forme de corps, de construction séparée, susceptible d'être relié à la buse (26) du tube de vapeur surchauffée (23), caractérisé en ce que le prolongement (35) est réalisé sous la forme d'un corps élastique, qui présente des alésages ou orifices (40, 41) en vue d'introduire hermétiquement la buse (26) et l'extrémité avant du dispositif de guidage d'air (30).

2. Dispositif pour préparer un cappuccino selon la revendication 1, caractérisé en ce que le prolongement (35) est un corps creux d'un seul tenant, en un matériau ayant l'élasticité du caoutchouc, dont l'espace creux (36) est limité, sur sa face tournée vers le tube de vapeur surchauffée (23), par une paroi extérieure (42), dans laquelle se trouvent les alésages ou orifices de sortie (40, 41) et dont l'autre paroi extérieure (43) placée en face présente l'échappement (37).

3. Dispositif pour préparer un cappuccino selon les revendications 1 et 2, caractérisé en ce que la paroi extérieure (42) qui présente les alésages (40, 41) est d'une épaisseur qui est un multiple de celle de l'autre paroi extérieure (43) placée en face et que les alésages (40, 41) sont disposés à distance, les uns à côté des autres.

4. Dispositif pour préparer un cappuccino selon une ou plusieurs des revendications précédentes, caractérisé en ce que l'une des deux parois latérales du prolongement (35) présente une région ou zone (44) inclinée en direction de l'échappement (37) du prolongement (35).

5. Dispositif pour préparer un cappuccino selon la revendication 1, caractérisé en ce que le dispositif de guidage d'air (30) est un tronçon rectiligne de tube, coupé à longueur, dont une extrémité est fixée par serrage dans l'alésage (41) du prolongement (35).

6. Dispositif pour préparer un cappuccino selon la revendication 1, caractérisé en ce qu'à l'extrémité supérieure (31), présentant l'ouverture d'introduction (60), du dispositif de guidage d'air (30) est associé un recouvrement (50) amovible qui présente un passage (52) ouvert vers l'atmosphère, relié à l'espace creux (53) continu du dispositif de guidage d'air (30), la surface de la section transversale du passage (52) étant inférieure à celle de l'espace creux (53).

7. Dispositif pour préparer un cappuccino selon les revendications 1 et 6, caractérisé en ce que le recouvrement (50) est fabriqué en un matériau élastique et fixé par une force de serrage sur l'extrémité supérieure (31) du dispositif de guidage d'air (30) (figures 3 à 5).

8. Dispositif pour préparer un cappuccino selon les revendications 6 et 7, caractérisé en ce que le recouvrement (50) est réalisé comme un corps en forme de capot, dont la zone inférieure (54) entoure avec serrage l'extrémité supérieure (31) du dispositif de guidage d'air (30) et dont le couvercle (51) présente de préférence en son centre le passage (52) (figures 3 à 5).

9. Dispositif pour préparer un cappuccino selon la revendication 8, caractérisé en ce que le couvercle (51) est incurvé en demi-sphère et présente en son sommet le passage (52) (figures 3 à 5).

10. Dispositif pour préparer un cappuccino selon la revendication 6 et 7, caractérisé en ce que le recouvrement (55) est réalisé sous forme d'un corps fabriqué en un matériau élastique, dont le montant (58) coopère, avec un serrage, avec les parois intérieures de l'espace creux (53) du dispositif de guidage d'air (30) et dont la tête (56) en forme de champignon appuie, par son arête intérieure (57), sur la surface frontale du dispositif de guidage d'air (30) et que la tête (56) en forme de champignon et le montant (58) sont traversés par un alésage traversant (59) (figure 6).

11. Dispositif pour préparer un cappuccino selon la revendication 10, caractérisé en ce que la section efficace de la surface transversale de l'asélage traversant (59) du recouvrement (55) est modifiable par un organe de réglage (62).

12. Dispositif pour préparer un cappuccino selon la revendication 11, caractérisé en ce que l'organe de réglage (62) (figure 8) est réalisé sous forme de curseur ou de robinet monté à rotation.

13. Dispositif pour préparer un cappuccino selon les revendications 6 à 12, caractérisé en ce qu'à un unique dispositif de guidage d'air (30) sont associés plusieurs recouvrements (50 ou 55), qui présentent des passages (52) ou alésages (59) de dimensions différentes, l'utilisateur pouvant enficher, à volonté, un recouvrement (50 ou 55) choisi sur le dispositif de guidage d'air (30).

EP 0 374 637 B1

FIG.1

FIG. 2

FIG. 3

FIG. 4

FIG. 5

FIG. 6